# EUROPEAN PATENT APPLICATION

(11) **EP 4 674 695 A1**
(43) Date of publication of application: **07.01.2026**
(21) Application number: 24806913.0
(22) Date of filing: 10.04.2024
(51) Int. Cl.: B60R 16/02, B60L 50/60, B60L 53/14, H02J 1/00, H02J 7/00

(54) **POWER SUPPLY UNIT AND MOBILE BODY**

(30) Priority: 15.05.2023 JP 2023080207
(71) Applicant: Japan Aviation Electronics Industry, Limited, Tokyo 150-0043 (JP)
(72) Inventor: NAKAMURA, Kazunobu, Tokyo 150-0043 (JP)
(74) Representative: Prüfer & Partner mbB Patentanwälte · Rechtsanwälte
(86) International application number: PCT/JP2024/014539
(87) International publication number: WO 2024/236959

(57) **Abstract**

A power supply unit (10) has a first input terminal (101) to which a main control signal is input, a power supply input terminal (103) connected to a battery, a power supply output terminal (105), and a control unit (12). The control unit (12) applies a voltage to the power supply input terminal (103) and supplies output power, for which the maximum value is controlled, from the power supply output terminal (105) to an external device. The control unit (12) has at least a first upper limit power mode and a second upper limit power mode. The control unit (12) operates in the first upper limit power mode when the main control signal is in an ON state, and operates in the second upper limit power mode when the main control signal is in an OFF state. The maximum value of the output power in the second upper limit power mode is lower than the maximum value of the output power in the first upper limit power mode.

## Description

### Technical Field

This invention relates to a power supply unit and a movable body which is provided with the same.

### Background Art

A vehicle, such as an automobile, on which a battery is mounted, has various electrical and electronic devices mounted thereon. As a technique related to reducing power consumption in such a vehicle, there is an example disclosed in Patent Document 1.

As described in Patent Document 1, typically, there are three modes, (1) an off mode in which a power source is cut off, (2) an accessory mode in which only an accessory power source is turned on and (3) an on mode in which all power sources are turned on, as power supply modes of a vehicle.

In order to improve user convenience, electrical and electronic devices (accessories) which can be used in the accessory mode are increasingly mounted on vehicles. A USB charger is one of the accessories which is mounted on a vehicle.

In order to avoid the battery from running out, it is desirable that power consumption in the accessory mode is as little as possible. Accordingly, suppliable power of a conventional in-vehicle USB charger is limited below a predetermined power. This limitation does not depend on the power supply modes. In other words, the power supply capacity of the conventional in-vehicle USB charger is the same in the accessory mode as it is in the on mode.

### Prior Art Documents

### Patent Document(s)

Patent Document 1: JP 2023-43752 A

### Summary of Invention

### Technical Problem

According to the USB PD standard, a power supply device can have relatively large power supply capacity. If such a power supply device is used as an in-vehicle USB charger, it increases user convenience, for example, it allows user devices to be quickly charged. However, simply substituting the power supply device conforming to the USB PD standard for the conventional in-vehicle USB charger increases a possibility that the battery runs out.

It is therefore an object of the present invention to provide a power supply unit which has a larger power supply capacity and which keeps a possibility that the battery runs out at the same level as or less than that of the conventional in-vehicle USB charger.

### Solution to Problem

In order to achieve the aforementioned object, the present invention distinguishes a case of an accessory mode in which it is worried that the battery runs out and a case of an on mode in which it is not worried that the battery runs out. And, the present invention intends to improve user convenience by supplying power with relatively small power supply capacity in the case of the accessory mode and by supplying power with relatively large power supply capacity in the case of the on mode.

One aspect of the present invention provides, as a first power supply unit, a power supply unit to be mounted on a movable body which has a drive portion, a starting switch which is operated when activating the drive portion and which switches at least states of a main control signal, and a battery which is charged when the main control signal is in an ON state and the drive portion is running, wherein: the power supply unit has a first input terminal to which the main control signal is input, a power supply input terminal which is connected to the battery, a power supply output terminal, and a control unit; when a voltage is input to the power supply input terminal, the control unit supplies output power, whose maximum value is controlled, from the power supply output terminal to an outside; the control unit has at least a first upper limit power mode and a second upper limit power mode; the control unit operates in the first upper limit power mode when the main control signal is in the ON state and operates in the second upper limit power mode when the main control signal is in an OFF state; and the maximum value of the output power in the second upper limit power mode is smaller than the maximum value of the output power in the first upper limit power mode.

Furthermore, another aspect of the present invention provides, as a first movable body, a movable body comprising a drive portion, a battery, a starting switch and the power supply unit as recited in any one of claims 1 to 4, wherein: the starting switch is operated when activating the drive portion and switches at least the states of the main control signal; and the battery is charged when the main control signal is in an ON state and the drive portion is running.

### Advantageous Effects of Invention

In the power supply unit according to the one aspect of the present invention, the control unit operates in the first upper limit power mode when the main control signal is in the on mode and operates in the second upper limit power mode when the main control signal is in the off mode. Here, the maximum value of the output power in the second upper limit power mode is smaller than that of the output power in the first upper limit power mode. Accordingly, the power supply unit can supply relatively small power when it is worried that the battery runs out and supply relatively large power when it is not worried that the battery runs out. In this way, user convenience can be improved.

An appreciation of the objectives of the present invention and a more complete understanding of its structure may be had by studying the following description of the preferred embodiment and by referring to the accompanying drawings.

### Brief Description of Drawings

Fig. 1 is a block diagram showing a power supply unit according to an embodiment of the present invention.
Fig. 2 is a block diagram for describing a supplying power operation in a movable body including the power supply unit of Fig. 1. A main control signal is in an OFF state while a sub control signal is in an ON state.
Fig. 3 is another block diagram for describing the supplying power operation in the movable body including the power supply unit of Fig. 1. Both the main control signal and the sub control signal are in the ON state.

### Description of Embodiments

While the invention may be realized in various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

### [First embodiment]

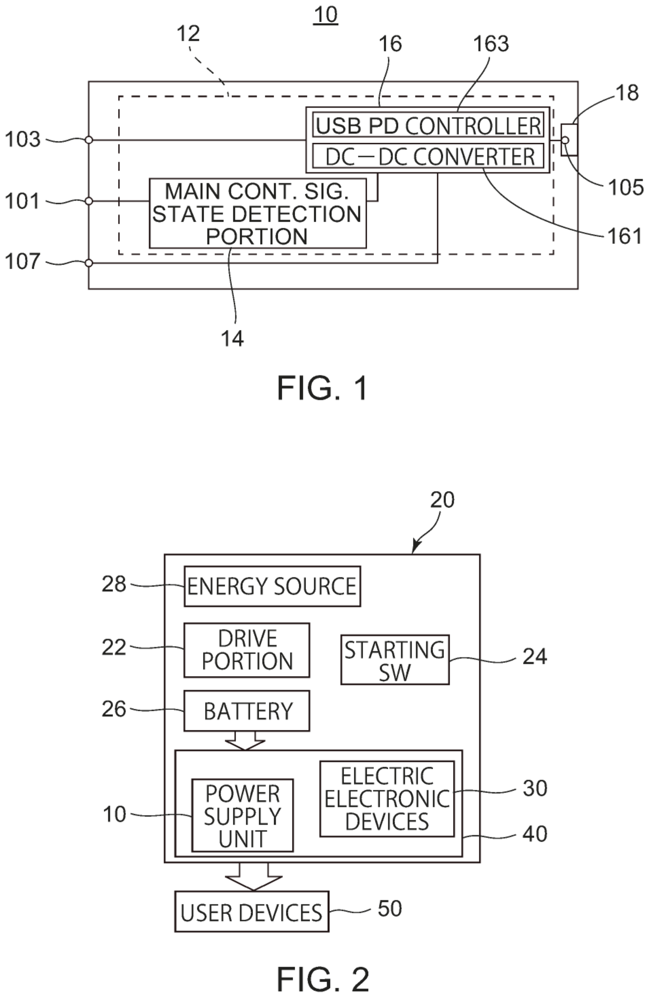

Referring to Fig. 1, a power supply unit 10 according to an embodiment of the present invention has a first input terminal 101, a power supply input terminal 103, a power supply output terminal 105 and a control unit 12. In the present embodiment, the power supply unit 10 further has a second input terminal 107. However, the second input terminal 107 is not essential in the present invention.

As shown in Fig. 2, the power supply unit 10 is mounted on a movable body 20. In the present embodiment, the movable body 20 is an engine automobile. However, the present invention is not limited thereto. The movable body 20 may be an electric automobile, a fuel cell automobile, a motorcycle or an electric motorcycle.

As shown in Fig. 2, the movable body 20 has a drive portion 22, a starting switch 24 and a battery 26. In the present embodiment, the movable body 20 further has an energy source 28 and electrical and electronic devices 30. In the present embodiment, the power supply unit 10 is classified as accessories 40 as the electrical and electronic devices 30 are. In the electrical and electronic devices 30, various electrical devices and various electronic devices may be included. The power supply unit 10 is used to supply power to electrical and electronic devices used by users (user devices) 50.

Referring to Fig. 2, the energy source 28 is fuel, such as gasoline, light oil or hydrogen. When the movable body 20 is an electric automobile, the energy source 28 is a driving battery. In the present embodiment, the drive portion 22 is an engine. When the movable body 20 is an electric automobile, the drive portion 22 consists of motors. In the present embodiment, the battery 26 is a lead-acid battery. However, the present invention is not limited thereto. The battery 26 may be another kind of battery, such as a lithium-ion battery.

Referring to Fig. 2, the starting switch 24 is a switch operated by a user at the time of starting the drive portion 22. The starting switch 24 switches at least states of a main control signal. In the present embodiment, the starting switch 24 also switches states of a sub control signal besides the main control signal. In the present embodiment, the starting switch 24 is an ignition switch. When the movable body 20 is an electric automobile, the starting switch 24 is a power switch.

Generally, the ignition switch has an off mode, an accessory mode and an on mode. The ignition switch also serves as a starter switch to start the drive portion 22. In the following description, it is assumed that the starting switch 24 has the off mode, the accessory mode and the on mode. In addition, it is assumed that the drive portion 22 is started and operates when the starting switch 24 is in an ON state.

In the present embodiment, when the starting switch 24 is in the off mode, both the main control signal and the sub control signal are in an OFF state. When the starting switch 24 is operated from the off mode to the accessory mode, the main control signal remains in the OFF state while the sub control signal is switched from the OFF state to an ON state. Moreover, when the starting switch 24 is operated from the accessory mode to the on mode, the sub control signal remains in the ON state while the main control signal is switched from the OFF state to an ON state.

Referring to Fig. 2, when the starting switch 24 is in the off mode, supplying power is stopped from the battery 26 to the accessories 40. When the starting switch 24 is operated from the off mode to the accessory mode, power is supplied from the battery 26 to the accessories 40. At this time, the drive portion 22 does not operate, and supplying power is not performed from the drive portion 22 to the battery 26. Accordingly, in the accessory mode, the battery 26 might run out when power consumption in the accessories 40 is large.

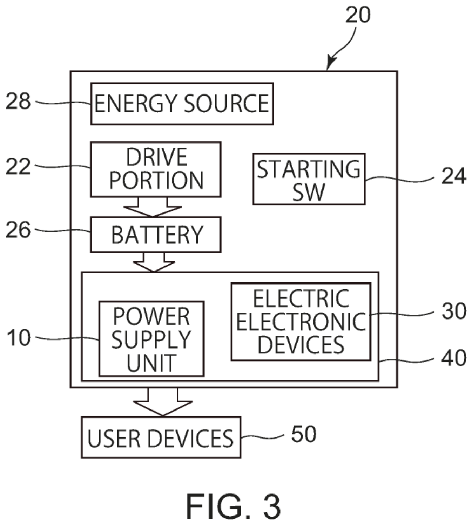

Referring to Fig. 3, when the starting switch 24 is operated from the accessory mode to the on mode, power is supplied from the battery 26 to the accessories 40. Moreover, in the on mode, supplying power is performed from the drive portion 22 to the battery 26. Generally, power supply capacity of the drive portion 22 is larger than the power consumption of the accessories 40. Accordingly, the battery 26 is charged when the main control signal is in the ON state and the drive portion 22 operates. Therefore, normally, in the on mode, there is no possibility that the battery 26 runs out.

Referring again to Fig. 1, the control unit 12 of the power supply unit 10 has a main signal state detection portion 14 and a power supply portion 16. In addition, the power supply unit 10 further has a connector 18. In the present embodiment, the control unit 12 complies with the USB PD standard. The main signal state detection portion 14 is connected to the first input terminal 101 and the power supply portion 16. The power supply portion 16 has a DC-DC converter 161 and a USB PD controller 163. The power supply portion 16 is connected to the power supply input terminal 103, the second input terminal 107 and the power supply output terminal 105. The connector 18 is attached to the power supply output terminal 105. In other words, the power supply output terminal 105 is arranged in the connector 18. In the present embodiment, the connector 18 is a connector which complies with the USB standard. The connector 18 may be a USB Type-C connector, for example. However, the present invention is not limited thereto. The connector 18 may be a connector other than the USB Type-C connector.

Referring to Figs. 1 and 2, the power supply input terminal 103 is connected to the battery 26. The first input terminal 101 and the second input terminal 107 are connected to the starting switch 24. To the first input terminal 101, the main control signal is input, and to the second input terminal 107, the sub control signal is input.

Referring to Fig. 1, to the power supply input terminal 103, a voltage from the battery 26 is input. The control unit 12 supplies an output power of which the maximum value is controlled to the outside through the power supply output terminal 105 when the voltage is input to the power supply input terminal 103. The control unit 12 has at least a first upper limit power mode and a second upper limit power mode to control the maximum value of the output power. As described later, the control unit 12 operates in the first upper limit power mode when the main control signal is in the ON state, and it operates in the second upper limit power mode when the main control signal is in the OFF state. The maximum value of the output power in the second upper limit power mode (a second maximum value) is set so that it is smaller than the maximum value of the output power in the first upper limit power mode (a first maximum value). For example, the first maximum value is equal to 60W = 20V x 3A, and the second maximum value is equal to 27W (9V x 3A).

Referring to Figs. 1 and 2, in an initial condition, when the starting switch 24 is in the off mode, both the main control signal and the sub control signal are in the OFF state. In the off mode, the control unit 12 is in a state where its operation is stopped.

Referring to Fig. 2, when the starting switch 24 is operated to shift the mode from the off mode to the accessory mode, the sub control signal is switched from the OFF state to the ON state. This causes that the control unit 12 is shifted from a stopped state to an operating state. Incidentally, the main control signal remains in the OFF state. The main signal state detection portion 14 detects that the main control signal is in the OFF state and informs the power supply portion 16 of it. The power supply portion 16 operates in the second upper limit power mode based on the detection signal from the main signal state detection portion 14. In detail, the USB PD controller 163 of the power supply portion 16 controls the DC-DC converter 161 based on the detection signal from the main signal state detection portion 14 and limits the maximum value of the power supplied to the power supply output terminal 105 to the second maximum value (< the first maximum value). Thus, the power supply unit 10 performs the supplying power to the user devices 50 in the state where the maximum value is limited to the second maximum value.

Referring to Fig. 3, when the starting switch 24 is operated again and the mode is shifted from the accessory mode to the on mode, the main control signal is switched from the OFF state to the ON state. The main signal state detection portion 14 detects that the main control signal is in the ON state and informs the power supply portion 16 of it. The power supply portion 16 operates in the first upper limit power mode based on the detection signal from the main signal state detection portion 14. In detail, the USB PD controller 163 of the power supply portion 16 controls the DC-DC converter 161 based on the detection signal from the main signal state detection portion 14 and limits the maximum value of the power supplied to the power supply output terminal 105 to the first maximum value (> the second maximum value).

Thus, the power supply unit 10 performs the supplying power to the user devices 50 in the state where the maximum value is limited to the first maximum value.

When the starting switch 24 is operated to shift the mode from the on mode to the accessory mode, the main control signal is switched from the ON state to the OFF state. The main signal state detection portion 14 detects that the main control signal is in the OFF state and informs the power supply portion 16 of it. The power supply portion 16 operates in the second upper limit power mode based on the detection signal from the main signal state detection portion 14. That is, the maximum value in the supplying power from the power supply unit 10 to the user devices 50 is limited to the second maximum value.

When the starting switch 24 is further operated to shift the mode from the accessory mode to the off mode, the sub control signal is switched from the ON state to the OFF state. This causes that the supplying power to the accessories 40 including the power supply unit 10 is stopped. In this way, the control unit 12 of the power supply unit 10 stops its operation when the sub control signal is in the OFF state. Accordingly, the supplying power from the power supply unit 10 to the user devices 50 is stopped.

As described above, in the present embodiment, the maximum value of the power supply of the power supply unit 10 is different between in the accessory mode and in the on mode. In detail, the maximum value of the power supply in the accessory mode is smaller than the maximum value of the power supply in the on mode. Accordingly, the possibility that the battery 26 runs out can be reduced to the same level as or less than that of a conventional in-vehicle USB charger. On the other hand, the maximum value of the power supply in the on mode is larger than the maximum value of the power supply in the accessory mode. It can also be said that the maximum value of the power supply in the on mode is larger than the maximum value of the power supply of the conventional in-vehicle USB charger. Thus, the power supply unit 10 can supply relatively large power to the user devices 50. For example, the power supply unit 10 can quickly charge a personal computer (PC), etc.

Although the specific explanation about the present invention is made above with reference to concrete embodiments, the present invention is not limited thereto but susceptible of various modifications and alternative forms without departing from the spirit of the invention. Although the control unit 12 of the power supply unit 10 is operated when the sub control signal is in the ON state in the aforementioned embodiment, the control unit 12 may always operate when the sub control signal is nonexistent, for example. In such a case as well, the control unit 12 should operate in the first upper power mode when the main control signal is in the ON state, and it should operate in the second upper power mode when the main control signal is in the OFF state.

Moreover, although charging the battery 26 is performed by the drive portion 22 in the aforementioned embodiment, the charging may be performed from the driving battery, which is the energy source 28, to the battery 26 when the movable body 20 is an electric automobile. In such a case, the drive portion 22 performs charging of the driving battery during its operation.

This application is based on a Japanese Patent Application of JP2023-80297 filed with the Japanese Patent Office on May 15, 2023, the contents of which are incorporated herein in their entirety by reference.

While there has been described what is believed to be the preferred embodiment of the invention, those skilled in the art will recognize that other and further modifications may be made thereto without departing from the spirit of the invention, and it is intended to claim all such embodiments that fall within the true scope of the invention.

### Reference Signs List

- 10: Power Supply Unit
- 101: First Input Terminal
- 103: Power Supply Input Terminal
- 105: Power Supply Output Terminal
- 107: Second Input Terminal
- 12: Control Unit
- 14: Main Signal State Detection Portion
- 16: Power Supply Portion
- 161: DC-DC Converter
- 163: USB PD Controller
- 18: Connector
- 20: Movable Body
- 22: Drive Portion
- 24: Starting Switch
- 26: Battery
- 28: Energy Source
- 30: Electrical and Electronic Device
- 40: Accessory
- 50: Electrical and Electronic Device (User Device)

## Claims

1. A power supply unit to be mounted on a movable body which has a drive portion, a starting switch which is operated when activating the drive portion and which switches at least states of a main control signal, and a battery which is charged when the main control signal is in an ON state and the drive portion is running, wherein:
the power supply unit has a first input terminal to which the main control signal is input, a power supply input terminal which is connected to the battery, a power supply output terminal, and a control unit;
when a voltage is input to the power supply input terminal, the control unit supplies output power, whose maximum value is controlled, from the power supply output terminal to an outside;
the control unit has at least a first upper limit power mode and a second upper limit power mode;
the control unit operates in the first upper limit power mode when the main control signal is in the ON state and operates in the second upper limit power mode when the main control signal is in an OFF state; and
the maximum value of the output power in the second upper limit power mode is smaller than the maximum value of the output power in the first upper limit power mode.

2. The power supply unit as recited in claim 1, wherein:
the starting switch further switches states of a sub control signal;
the power supply unit further has a second input terminal to which the sub control signal is input; and
the control unit operates when the sub control signal is in an ON state and stops operating when the sub control signal is in an OFF state.

3. The power supply unit as recited in claim 2, wherein the control unit complies with the USB PD standard.

4. The power supply unit as recited in claim 3, wherein:
the power supply unit has a USB standard connector; and
the power supply output terminal is disposed in the connector.

5. A movable body comprising a drive portion, a battery, a starting switch and the power supply unit as recited in any one of claims 1 to 4, wherein:
the starting switch is operated when activating the drive portion and switches at least the states of the main control signal; and
the battery is charged when the main control signal is in an ON state and the drive portion is running.
